# EUROPEAN PATENT APPLICATION

(11) **EP 4 803 425 A1**
(43) Date of publication of application: **09.09.2026**
(21) Application number: 25161364.2
(22) Date of filing: 03.03.2025
(51) Int. Cl.: B64U 60/50, B29C 65/48, B64U 101/45, B64D 1/16

(54) **DRONE LANDING GEAR**

(71) Applicant: Majoe, Dennis, Eastleigh, Hampshire SO50 9LH (GB)
(72) Inventor: Majoe, Dennis, Eastleigh, Hampshire SO50 9LH (GB)
(74) Representative: Schlich

(57) **Abstract**

Landing gear for a drone, comprises:
a landing foot,
a glue reservoir,
a heater capable of melting glue in the reservoir, and
a dispenser capable of dispensing melted glue onto the landing foot.

A drone comprises the landing gear and lands and adheres to a surface by heating then dispensing glue onto the landing foot and allowing the glue to cool. To take off a heater in the foot heats and melts the cooled glue, to release the drone foot.

## Description

### Introduction

The present invention relates to drone landing gear, in particular to a drone comprising the landing gear and methods that enable a drone to land and take off again.

### Background to the Invention

Drones, or unmanned aerial vehicles (UAVs), are known to be used widely for observation and surveillance purposes. However, battery capacity in drones is limited, leading to short flights and, in turn, short surveillance times.

Since an active drone hovering drains the battery quickly, ways of improving energy efficiency are sought after in the field. One way to reduce the energy usage involves reducing the time a drone spends in the air. This is achieved by allowing the drone to temporarily rest on a landing surface when drone movement is not necessary. This is also known as drone perching.

There are several methods used to achieve drone perching. The most common technique involves using actuated claw-like structures that can grab onto branches when the drone is landing. This, however, limits the drone's vantage points and leaves the drone in a vulnerable, unstable state. Other techniques have been proposed, including electroadhesion, vacuum suction, microhooks, gecko-inspired dry adhesives, small needles or microspines, however, these methods have limited landing surfaces, are unable to support heavier drones and cannot adapt to different environments. It is also known to load adhesive from mussels onto a pad attached to a drone and use this to partially support drone weight during perching, but the drone rotors must remain on at low power, and to detach the drone the pad must be peeled away from the landing surface.

An aim of the present invention is an alternative, preferably improved, drone landing gear that addresses and preferably ameliorates one or more problems identified in the art.

### Summary of Invention

Accordingly, the present invention provides landing gear for a drone, comprising: a landing foot, a glue reservoir, a heater capable of melting glue in the reservoir, and a dispenser capable of dispensing melted glue onto the landing foot. A drone of the invention comprises such landing gear.

The present invention also provides a method of adhering a drone to a landing surface, comprising providing the drone with glue in the reservoir, heating the glue, dispensing heated glue on a landing foot between the landing surface and a lower surface of the landing foot, and allowing the glue to cool.

Advantageously, as described below and specifically in the examples, glue can be dispensed onto a landing surface to provide adhesion thereto, sufficient for power to drone rotors to be switched off. The glue can then be melted to release the drone from its attached position.

### Details of the Invention

Hence, as set out above, there is provided landing gear for a drone, comprising: a landing foot, a glue reservoir, a heater capable of melting glue in the reservoir, and a dispenser capable of dispensing melted glue onto the landing foot. Melted glue is suitably dispensed onto a lower surface of the landing foot; drone weight and/or thrust can then press the glue between the foot, suitably between its lower surface and the landing surface so the drone can adhere to the landing surface.

Suitable glue for use in the invention melts when heated and sets when cooled, e.g. down to ambient temperature (25°C). Embodiments of the invention use cold melt glue, e.g. ethylene-vinyl acetate glue. This can be in the form of a glue stick for feeding into a heater. Such glues may have a melting temperature of approx. 80°C or 90°C and can be dispensed once melted, usually at temperatures of approx. 100°C and above. Hot melt glue can also be used but requires additional heating and may take longer to cool and set.

The heater, referred to elsewhere as the first heater, may be capable of heating the glue to a temperature in the range 80°C to 120°C. Glue is heated and melted, and molten glue is dispensed and cools and sets, securing the drone foot to the landing surface.

Landing gear of further embodiments of the invention may comprise a first heater and a second heater, wherein the first heater is capable of heating glue in the reservoir, and the second heater is capable of heating glue adhered to the landing foot. In preferred embodiments, the second heater can heat and melt glue adhered to a lower surface of the foot.

The two heaters are preferably separate heaters and operated independently, and substantially do not interfere with each other. Thus, operating the first heater preferably does not heat and melt glue on the foot. Similarly, operating the second heater does not need to heat glue in the reservoir.

The landing gear may also comprise a temperature sensor in or associated with the foot, e.g. a thermistor, to measure temperature and for use in indirectly reporting glue temperature on the foot. After landing foot temperature can be monitored to assess whether the glue has set; rotor power can be switched off at that point. Prior to take off, foot temperature can be monitored. Once a predetermined temperature is reached drone rotors can be turned on, e.g. in anticipation of the glue having melted sufficiently to allow release of the foot from the surface.

The second heater is preferably adapted to heat and melt glue that attaches the foot to a landing surface. It may be capable of heating the glue to higher temperature than the first heater. It may be capable of heating glue to a temperature of >120°C. It may alternatively or additionally be of higher power than the first heater or capable of heating the glue more rapidly. To land and attach, glue can be heated and used when ready. To take off, adhering glue on the foot can advantageously be heated rapidly, melting just a thin film, releasing the foot and leaving behind a large proportion of the glue on the landing surface rather than on the foot. This facilitates repeat use of the landing gear.

In still further embodiments, the landing gear comprises a heater capable of heating both glue in the reservoir, and glue adhered to the landing foot, e.g. on its lower surface.

Hence there may be a single heater for both heating functions. In use, this single heater can be operated at one power level for heating glue in the reservoir and at a second, higher level, such as at least 10% higher power, or at least 50% higher power, for heating glue on the foot.

Cooling, and thereby setting, of glue can be active or passive. The landing gear suitably comprises a cooler capable of cooling glue on the landing foot, e.g. on its lower surface. The cooler suitably is or comprises a cooling element; this is typically located in or on the foot, preferably on or at its lower surface. It may be a heat sink or a heat dissipating area or surface, being part of or attached to the foot. Heat conducting material, especially metals and alloys, used to make the foot can also act as a heat sink sufficient to cool glue to setting temperature. Heat dissipating surfaces with a large surface area allow molten glue to set quickly and additional cooling elements / methods may not be required. The heat dissipating surface of a specific embodiment described below is made of aluminium and it was found that glue cooled to ambient temperature and set in an acceptable timeframe. In other testing of the invention, heat dissipating fins were used; these were also effective in providing sufficient cooling to set the glue on the foot. A thermoelectric device can be used, to actively cool glue on the foot, and a Peltier device is suitable. A refrigerating device can also be used. If a thermoelectric device is used this can be used both to cool molten glue to set it and to heat set glue to melt it.

There can be a variety of landing surfaces, and surface contours, including flat roofs, walls, surfaces at angles to the horizontal, ceilings, all requiring different quantities of glue for optimal adherence. Embodiments of the invention provide a surface detector, optionally mounted on the landing gear or on a drone fitted with the landing gear (for more, see below). The detector surveys the landing surface and provides a signal to the dispenser indicative of the quantity of glue to be dispensed, and the dispenser can then dispense glue accordingly. In some embodiments, the detector comprises a camera used for assessing the approaching landing surface, indicating the amount of glue needed for adherence. The dispenser of embodiments of the invention is capable of dispensing a controlled amount of glue.

In use of the invention, molten glue is dispensed between the foot and the landing surface. Glue is preferably dispensed through the foot. A preferred foot comprises a conduit, or preferably a plurality of conduits, each conduit communicating at one end with the reservoir, passing through the foot and at the other end opening onto a lower surface of the foot. Molten glue can be dispensed through at least one conduit into a suitable location, i.e. the space between the lower surface of the foot and the landing surface.

The landing gear may be loaded with the glue. The reservoir is suitably full on initial take off.

The landing gear preferably comprises a plurality of feet, optionally associated with one reservoir and dispenser. Hence, preferred embodiments of the invention provide landing gear comprising: landing feet, a glue reservoir, a heater capable of melting glue in the reservoir, and a dispenser capable of dispensing melted glue onto the landing feet. The dispenser may comprise a conduit connecting the reservoir with each foot individually. Melted glue is suitably dispensed onto lower surfaces of the landing feet; drone weight and/or thrust can then press the glue between the feet and the landing surface so the drone can adhere to the landing surface using its multiple feet.

In further embodiments of the invention, set out in more detail below, landing gear comprises a plurality of feet and each foot comprises a glue reservoir, a heater capable of melting glue in the reservoir, and a dispenser capable of dispensing melted glue onto the foot, all as described elsewhere herein.

The invention also provides a drone comprising the landing gear. One foot may be enough. Typically, drone landing gear comprises a plurality of landing feet, from 2 to 6, more generally 3 or 4 landing feet, wherein glue is dispensed onto at least one landing foot, usually onto all feet. The feet are usually all substantially the same and spaced, preferably evenly, around the lower structure of the drone. A drone may also comprise a plurality of landing feet and, separately, landing gear of the invention. The invention is useful for drones of many types, including multi-rotor drones, also sometimes referred to as multicopters, in particular quadcopters. Landing gear for dones can comprise feet, legs or skis, usually a pair of feet/legs or skis or multiple feet/legs though the invention is not limited to the nature of other landing gear or support structure elements. In embodiments of the invention, the landing gear can be installed separately from or as part of any component of a drone that acts as landing gear, for example, it can be installed in a drone slide, skid, foot or leg.

In using the invention, a drone may be capable of landing at an angle or upside down. For example, for landing on a ceiling, the drone approaches, turns upside down and contacts the ceiling, the drone rotors then remain operational to fly the drone upside down and press the feet upwards onto the ceiling until glue has been dispensed and set, attaching the drone and then the rotors can be turned off. Glue can be heated and dispensed, or begun to be dispensed, before landing on the ceiling. Rotors are suitably restarted before beginning to melt the glue or very shortly thereafter.

Known drones do not have landing gear as described herein. The invention also provides a method of modifying a drone, comprising fitting the drone with landing gear according to the invention.

The landing gear comprises a landing foot capable of using glue that sets for adherence. It can be shaped to reduce or stop loss of melted glue e.g. from dripping or being dispensed in excess when the glue is dispensed at or prior to reaching the landing surface.

The foot may further comprise a protruding gripping surface. The gripping surface may protrude downwards and may be located on the landing foot so as to be the part of the landing gear that, on landing, first touches the landing surface. It is used to provide or increase friction between the landing foot and the landing surface; it suitably provides grip with the landing surface before glue sets. The gripping surface can be used for example to prevent the drone from sliding sideways, especially when it lands at an angle, and/or to reduce the risk of drone displacement by the wind before the glue is set. On landing, one or more such gripping surfaces can engage the landing surface and provide sufficient friction to hold the drone in place, optionally assisted by thrust from reverse operation of drone rotors, until glue is dispensed and has set. The protruding gripping surface can be made of any material that provides a coefficient of friction of 1.0. or greater, for example rubber, silicon or a rubber- or silicone-like material. The gripping surface is suitably spaced from the dispensed glue such that glue does not reach the protruding portion of the gripping surface and, hence, glue is not located between the gripping surface and the landing surface. The protruding gripping surface of a specific embodiment described below is made of silicone, providing a suitable amount of friction with the landing surface.

Known drone perching mechanisms do not use molten glue. The invention also provides a method of adhering a drone to a landing surface, comprising providing a drone comprising land gear according to the invention with glue in the reservoir, melting the glue, dispensing molten glue on a landing foot between the landing surface and a lower surface of the landing foot, and allowing the glue to cool. Drone rotors can be further operated to press the lower surface of the landing foot onto the landing surface to promote adherence of the landing foot to the landing surface. Methods may comprise operating drone rotors to compress glue between the lower surface of the landing foot and the landing surface to promote adherence of the drone to the landing surface.

In some embodiments, methods involve heating the glue prior to landing on the landing surface, allowing faster adherence to the landing surface. Optimal heating can be achieved by a drone detecting it is approaching the landing surface, or the drone receiving a signal indicating that it is approaching the landing surface.

Preferred methods comprise cooling the glue between the lower surface of the landing foot and the landing surface. This can be achieved by actively cooling glue between a landing surface and a lower surface of a landing foot or by passively cooling glue between the landing surface and a lower surface of a landing foot.

In using the invention, a landing gear is preferably capable of detaching from the landing surface. Methods can involve reheating the glue between the landing surface and a lower surface of a landing foot until the drone is no longer adhered to the landing surface so the drone can take off. Methods can also involve reheating the glue between the landing surface and a lower surface of a landing foot until drone is capable of breaking free from the melting glue using rotor thrust.

Methods of adhering a drone to a landing surface can also comprise measuring the glue temperature at or on the foot, or feet, and turning off drone rotors at a predetermined temperature that indicates that the glue is set and the drone is attached. Conversely, the methods of departing from attachment can also comprise measuring the glue temperature at or on the foot, or feet, and turning on drone rotors at a predetermined temperature that indicates for example that (i) the drone is no longer attached or (ii) the glue is suitably molten for the drone to be able to break free.

Preferable embodiments comprise optimising dispenser parameters, heater parameters, or cooler parameters to achieve optimal drone perching. Changing dispenser parameters affects the amount of glue dispensed on the foot pad. Changing heater parameters allows using different kinds of glue in the invention. Parameters may be changed remotely during a flight.

### Advantages

Since the landing gear uses glue as a mean of adhesion, a drone is capable to adhere on to both rough and smooth surfaces. The ability to land on a wide range of surfaces means that the drone can be operated comfortably in cities where landing surfaces can be made of a variety of materials.

Another advantage of using glue is that the drone can be configured to land not only on vertical surfaces, but also at an angle or even upside down. The glue can provide strong adhesion, expanding the possible vantage points that the drone can use e.g. for perching during surveillance. Ultimately, the possibility to use a variety of structures as landing surfaces means that the drone does not need to use additional energy to find a suitable landing site, thus improving its energy efficiency.

Additionally, the technology can be adapted for different drones that operate in different environments because landing gear components can be optimised. The user has means to select the glue, set the amount of glue dispensed on to a foot or onto feet and set the temperature for heating and/or cooling elements. This means that successful drone perching can be achieved under a range of different operating conditions.

Drones that comprise a cooling element or a heat sink at the foot pad benefit from quicker adhesion to landing surfaces. When a drone adheres to a surface it needs to allow the glue to cool down. Having a cooling element or a heat sink accelerates this process and allows the drone to turn off its rotor faster.

Drones that comprise a second heating element at the foot pad can benefit from a fast take-off because drone release can take place more quickly. Since the second heating element targets the interface between the foot pad and the glue, it can be heated rapidly which allows the drone to save energy, by not heating all glue, and can be used to leave most of the glue on the landing surface after take-off.

Drones that comprise a thermoelectric device such as a Peltier device at the foot pad further benefit during the landing and take-off as a single device performs both heating and cooling functions, contributing to smaller weight of the drone.

### Examples

The invention is now described in more detail in a specific example with reference to the accompanying drawings in which:

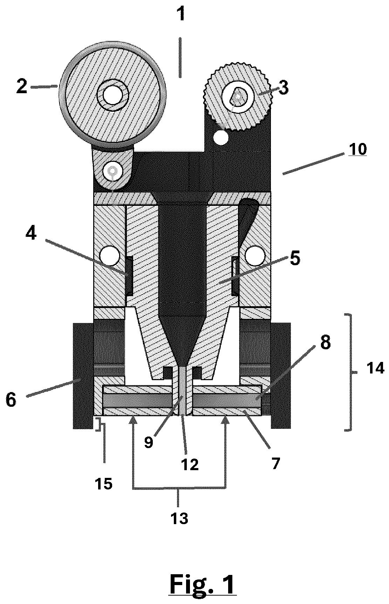

Fig. 1 shows a schematic cross-section of a landing gear of the invention;

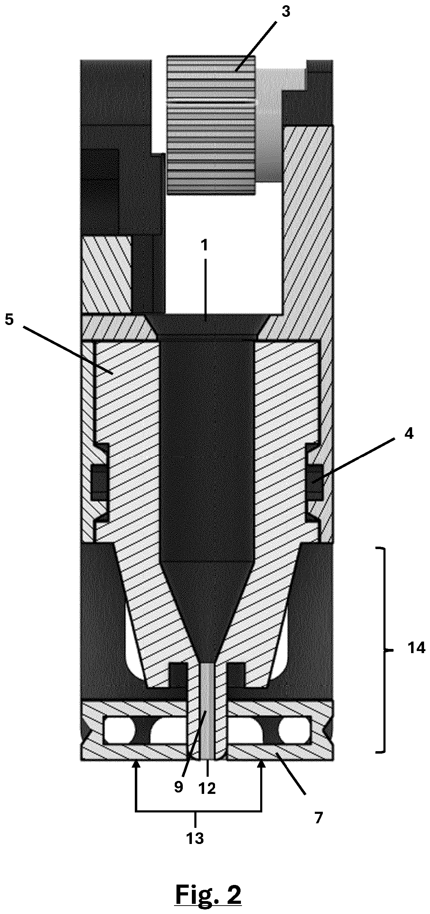

Fig. 2 shows a schematic cross-section of a landing gear of Fig. 1, at a right angle to the Fig. 1 view;

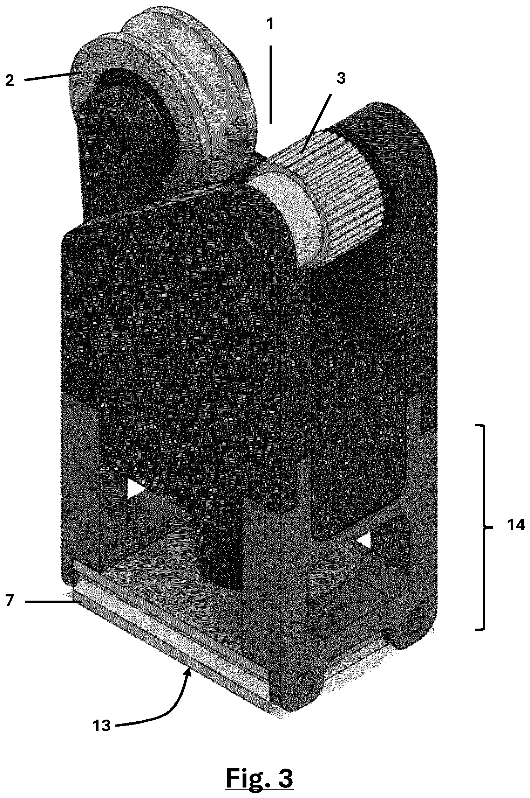

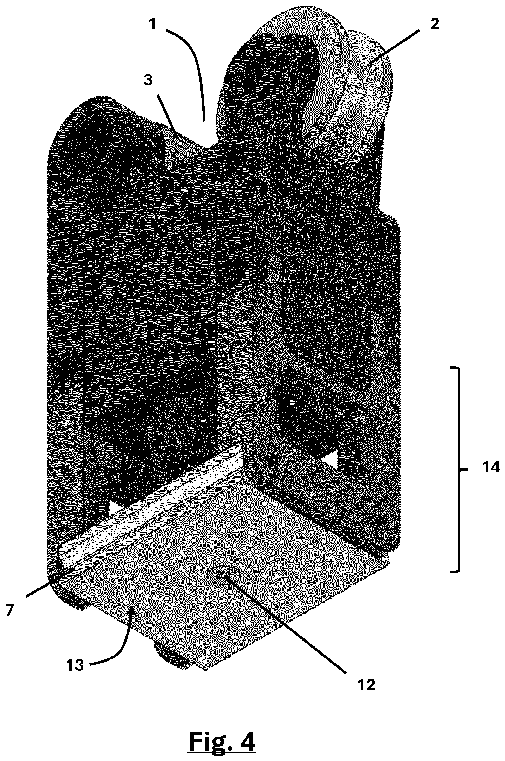

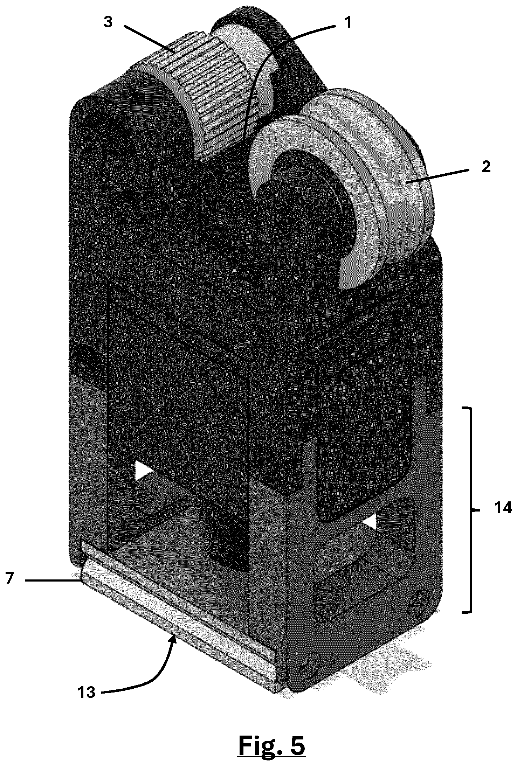

Figs. 3-5 shows schematic isometric views from above and below of the landing gear of Fig. 1;
Fig. 6 shows a schematic cross-section of a further landing gear of the invention comprising glue in the reservoir; and
Figs. 7 and 8 show further schematic isometric views with and without the dispensed glue of a landing gear of Fig 6.

Referring to the figures, a landing gear 10 has a toothed wheel 3, mounted opposite a grooved wheel guide 2. A lower portion marked as 14 provides a foot for contact with a landing surface. The wheel and guide are spaced apart so as to receive a glue stick from direction 1, which is gripped between the two wheels and driven towards crucible 5 by rotation of the ratcheted, toothed wheel 3 (using a motor, not shown).

The crucible 5 acts as a reservoir for the glue and has a heater 4 in its side wall. When operated the heater heats the glue in the crucible to and beyond its melting temperature. Further operating the toothed wheel 3 drives the unmolten end of the stick into the crucible and applies pressure on molten glue which is then dispensed through the foot via conduit 9 and exits via opening 12 onto the lower surface 13 of the landing foot.

When using the landing gear, molten glue is dispensed to form an approx. 2 mm layer between the lower surface of the foot and a landing surface. The glue is allowed to cool, leading to adhesion. At this point, drone rotors can be turned off.

A second heater 7 is mounted inside a lower part of the foot and close to its lower surface 13. To separate the foot from the landing surface, the second heater 7 is turned on and heats the interface between the lower foot surface and the set glue. Thermistor 8 measures the temperature and indicates when landing gear 10 can detach from the landing surface. The second heater is operated at high power to melt just a thin film of glue and allow detachment of the foot before the remaining glue has melted, enabling most of the glue to be left behind, still attached to the landing surface.

The second heater 7 is optionally a thermoelectric device such as Peltier device. It acts as a heater and as an active cooler depending on the direction of the supplied current. When the molten glue is dispensed between the lower surface of the foot and a landing surface, the thermoelectric device can be used as an active cooler to increase the speed at which the glue sets. To separate the foot from the landing surface, the thermoelectric device can be used as a heater to melt the glue and separate the lower surface of the foot from the landing surface.

Foot 14 optionally comprises a heat sink, such as heat dissipating fins. When the molten glue is dispensed between the lower surface of the foot and a landing surface, the heat dissipating fins are used as passive coolers, increasing the speed at which the dispensed glue sets between the foot and the landing surface.

A drone comprising the landing gear can securely adhere to rough and smooth surfaces, land on angled surfaces and upside down (e.g. on a ceiling).

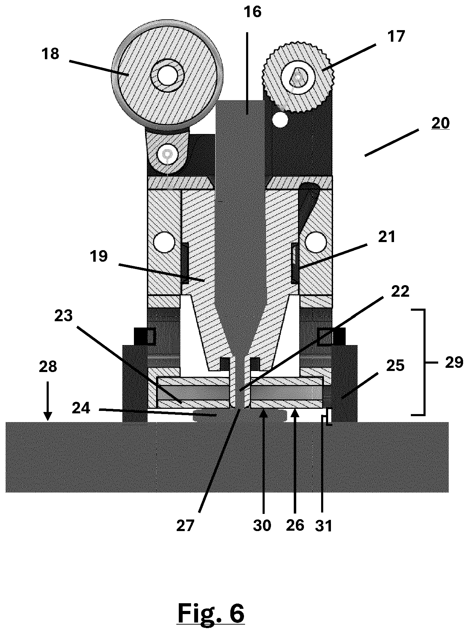

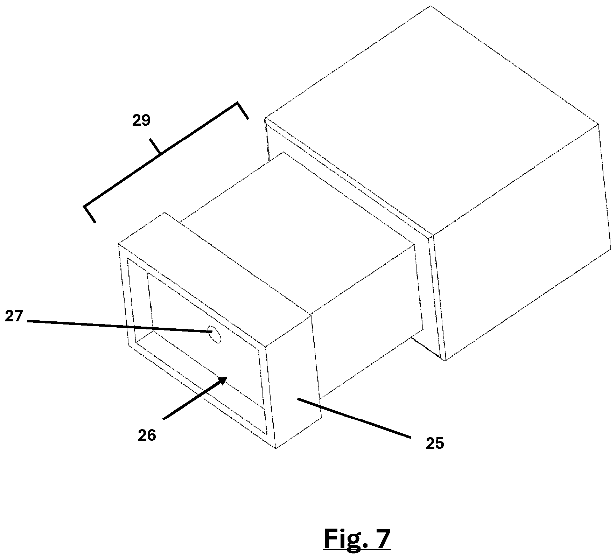

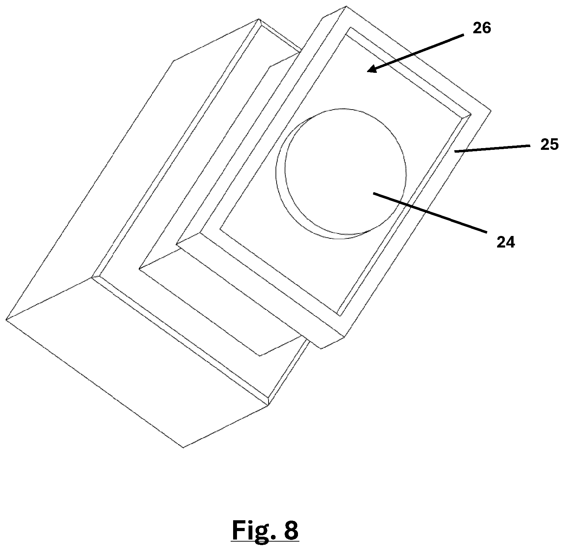

Referring to the Figures 6-8, a landing gear 20 is shown pressed against the landing surface 28. When the drone lands, the silicon protruding gripping surface 25 is in contact with the landing surface, providing friction between the landing surface and the landing foot 29 and preventing sideways slippage or displacement of the drone before the glue sets. A first heater 21 is turned on and glue 16 in crucible 19 is heated. Molten glue is dispensed via a conduit 22 between the lower surface of the landing foot 26 and a landing surface. The dispensed glue 24 then spreads evenly around the opening 27. Glue dispensing is controlled so it spreads sufficiently to provide adhesion to the landing surface but without reaching the silicon protrusion 31.

Dispensed glue sets through passive cooling, using a lower surface of the landing foot (made of aluminium) as a heat sink. The relatively large surface area of the lower surface of the landing foot compared with the extent of glue spreading conducts heat away efficiently. In testing of embodiments of the invention glue has set at ambient temperature within about 10 seconds, allowing the drone to turn off its engines soon after landing.

To separate the landing foot from the landing surface, a second heater 23 is turned on. The second heater heats an interface between the lower foot surface and the set glue 30. The second heater is operated at high power to melt just a thin film of glue and allow detachment of the foot 29 before the remaining glue has melted, enabling most of the glue to be left behind, still attached to the landing surface.

## Claims

1. Landing gear for a drone, comprising:
a landing foot,
a glue reservoir,
a heater capable of melting glue in the reservoir, and
a dispenser capable of dispensing melted glue onto the landing foot.

2. Landing gear according to claim 1, comprising a first heater and a second heater, wherein the first heater is capable of melting glue in the reservoir, and the second heater is capable of melting glue adhered to the landing foot.

3. Landing gear according to claim 2, wherein the first and second heaters are separate from each other and can be operated independently.

4. Landing gear according to claim 1, comprising a heater capable of heating both glue in the reservoir, and glue adhered to the landing foot.

5. Landing gear according to any previous claim, comprising a temperature sensor in or associated with the foot, e.g. a thermistor.

6. Landing gear according to any previous claim, wherein the foot comprises a downwards protruding gripping surface, to provide grip with the landing surface before glue sets.

7. Landing gear according to any previous claim, comprising a cooler capable of cooling glue on the landing foot.

8. Landing gear according to claim 7 wherein the cooler comprises a heat sink and/or hear dissipator.

9. Landing gear according to claim 7 or 8, wherein the cooler is located at a lower surface of the landing foot.

10. Landing gear according to any previous claim, comprising a thermoelectric device in or associated with the landing foot and capable of heating and cooling the landing foot.

11. Landing gear according to any previous claim, wherein the landing foot comprises a plurality of conduits for dispensing of glue through the foot.

12. A drone, comprising landing gear according to any of claims 1 to 11.

13. A method of adhering a drone to a landing surface, comprising:
(i) providing the drone according to claim 12 with glue in the reservoir,
(ii) heating the glue,
(iii) dispensing heated glue on a landing foot between the landing surface and the landing foot, and
(iv) allowing the glue to cool.

14. A method according to claim 13, comprising operating drone rotors to compress glue between the lower surface of the landing foot and the landing surface to promote adherence of the drone to the landing surface.

15. A method according to claim 13 or 14, comprising operating a heater on the foot pad to melt glue and release the drone from the landing surface.
